# EUROPEAN PATENT APPLICATION

(11) **EP 1 947 358 A1**
(43) Date of publication of application: **23.07.2008**
(21) Application number: 06810815.8
(22) Date of filing: 29.09.2006
(51) Int. Cl.: F16D 3/227

(54) **CROSS GROOVE TYPE CONSTANT VELOCITY UNIVERSAL JOINT**

(30) Priority: 19.10.2005 JP 2005304943
(71) Applicant: NTN Corporation, Osaka-shi, Osaka 550-0003 (JP)
(72) Inventor: UNE, Naohiro, Iwata-shi, Shizuoka 438-0037 (JP)
(74) Representative: Mischung, Ralf
(86) International application number: PCT/JP2006/319409
(87) International publication number: WO 2007/046227

(57) **Abstract**

The object is to reduce the weight of the outer race of cross groove constant velocity universal joints.

The cross groove constant velocity universal joint includes a disc-shaped outer race (10) having ball tracks (14) in the outer race inner circumferential surface (12), an inner race (20) having ball tracks (24) in the inner race outer circumferential surface (22), balls (30) set between the pairs of the ball tracks (14) of the outer race (10) and the ball tracks (24) of the inner race (20), and a cage (40) that retains all the balls (30) within the same plane. Bolt holes (16) are arranged between adjacent ball tracks (14) of the outer race (10), and the outer circumference of the outer race (10) is cut out as denoted at the reference numeral 18 between adjacent bolt holes (16) so that the outer race (10) has a corolla-shaped outer contour.

## Description

### TECHNICAL FIELD

This invention relates to a cross groove constant velocity universal joint for use in transmission devices of automobiles, railroad vehicles, and various industrial machines.

### BACKGROUND ART

Cross groove constant velocity universal joints have pairs of inner and outer race ball tracks that are oppositely inclined from each other with respect to the axis. Adjacent ball tracks are oppositely inclined and balls, which are torque transmitting elements, are set in the intersections of the ball tracks (see Non-Patent Document 1). Such a structure minimizes play between the balls and the ball tracks and it is commonly used, in particular, for car drive shafts or propeller shafts in which there should be no rattling.

Non-Patent Document 1 describes the most basic type of cross groove constant velocity universal joint. The document states that, with four or more, usually six, balls, the ball tracks are designed to intersect with the axis at an angle such that, when the joint takes its maximum operating angle, the opposing outer and inner race ball tracks will not be parallel with each other, which is usually 13 to 19°.
Non-Patent Document 1: E.R. Wagner, "Universal Joint and Driveshaft Design Manual," SAE, 1991, p. 163-166.

### DISCLOSURE OF THE INVENTION

### PROBLEMS TO BE SOLVED BY THE INVENTION

Among various cross groove constant velocity universal joints, disc type joints designed to be attached to vehicles are well known. Disc type cross groove constant velocity universal joints are bolt-fastened and therefore the outer race includes circumferentially equally spaced bolt holes. These bolt holes are arranged between adjacent ball tracks so that the outside diameter of the outer race need not be increased and that they are well-balanced with respect to the ball track positions. Consequently, the radial thickness of the outer race, from the ball tracks to the outer circumference, is large, resulting in an increase in weight.

A primary object of this invention is to reduce the weight of the outer race of cross groove constant velocity universal joints.

### MEANS FOR SOLVING THE PROBLEMS

The cross groove constant velocity universal joint of this invention includes a disc-shaped outer race having ball tracks in the outer race inner circumferential surface, an inner race having ball tracks in the inner race outer circumferential surface, balls set between the pairs of the outer race ball tracks and the inner race ball tracks, and a cage that retains all the balls within the same plane, and is characterized in that bolt holes are arranged between adjacent ball tracks of the outer race and that the outer circumference of the outer race is cut out between adjacent bolt holes so that the outer race has a corolla-shaped outer contour.

The invention as defined in claim 2 is characterized in that, in the cross groove constant velocity universal joint according to claim 1, the ball tracks intersect with the axis at an angle of 4.5° or more and less than 8.5°, and that the number of balls is eight. By setting the intersecting angle of the ball tracks of the cross groove constant velocity universal joint relative to the axis in the range of 4.5° or more and less than 8.5°, and with eight balls, the joint can have a reasonable maximum operating angle and a large sliding stroke. As mentioned before, in the cross groove constant velocity universal joint, when the balls are in a certain phase and the operating angle is too large, wedge angles are inverted and the balance of forces between the balls and the cage is lost, making the cage motion unstable. This phenomenon is evident when the angle made by the inner race ball tracks and the outer race ball tracks is small and the number of balls is six or less. However, by using eight or more balls, the cage motion can be made stable to a certain extent even when the angle made by the inner race ball tracks and the outer race ball tracks is made smaller.
This is because, even when some balls have lost their drive force due to inverted wedge angles, this is made up for by other balls, making the cage motion stable.

The invention as defined in claim 3 is characterized in that, in the cross groove constant velocity universal joint according to claim 1, the outer race ball tracks and the inner race ball tracks that are oppositely inclined intersect with the axis at an angle of 10° or more and not more than 15°, and that the number of balls is ten, the joint being for use in vehicle drive shafts.

In the case with cross groove constant velocity universal joints for drive shafts, by setting the intersecting angle of the ball tracks relative to the axis in the range of 10° or more and not more than 15°, and with ten balls, the joint can have a reasonable maximum operating angle and a large sliding stroke. As mentioned before, in the cross groove constant velocity universal joint, when the torque transmitting balls are in a certain phase and the operating angle is too large, the wedge angles are inverted and the balance of forces between the balls and the cage is lost, making the cage motion unstable. This phenomenon is evident when the angle made by the inner race ball tracks and the outer race ball tracks is small and the number of balls is six or less. However, by using ten balls, the cage motion can be made stable to a certain extent even when the angle made by the inner race ball tracks and the outer race ball tracks is made smaller. This is because, even when some balls have lost their drive force due to inverted wedge angles, this is made up for by other balls, making the cage motion stable.

Cross groove constant velocity universal joints for drive shafts are required to have an operating angle of about 20°; through the analysis with various operating angles up to 25°, it has been ascertained that the joint can have better bending characteristics than the conventional six-ball type if the intersecting angle of the ball tracks relative to the axis is 10° or more.

Thus, the intersecting angle of the ball tracks relative to the axis is made smaller to increase the sliding stroke without reducing the maximum operating angle, and the joint can have excellent bending characteristics with little possibility of jamming when bent. This improves the work efficiency in the vehicle assembly process. When the inner and outer races have the same intersecting angle relative to the axis, the joint is excellent both in constant velocity performance and bending characteristics.

Cross groove constant velocity universal joints with eight balls have better bending torque characteristics than the conventional six-ball joints. On the other hand, if the number of balls is eight, the pairs of radially opposite ball tracks in the inner or outer race are inclined oppositely from each other relative to the axis, and these pairs of ball tracks cannot be machined at the same time, which leads to poor machining efficiency, low productivity, and high costs. In contrast, with ten balls, the pairs of radially opposite ball tracks in the inner or outer race are inclined in the same direction relative to the axis. Therefore, these pairs of ball tracks can be machined at the same time, and thus ball tracks are machined with good efficiency, leading to good productivity and lower costs.

The invention as defined in claim 4 is characterized in that, in the cross groove constant velocity universal joint according to claim 1, the outer race ball tracks and the inner race ball tracks that are oppositely inclined intersect with the axis at an angle of 5° or more and not more than 9°, and that the number of balls is ten, the joint being for use in vehicle propeller shafts.

In the case with cross groove constant velocity universal joints for propeller shafts, by setting the intersecting angle of the ball tracks relative to the axis in the range of 5° or more and not more than 9°, and with ten balls, the joint can have a reasonable maximum operating angle and a large sliding stroke. As mentioned before, in the cross groove constant velocity universal joint, when the torque transmitting balls are in a certain phase and the operating angle is too large, the wedge angles are inverted and the balance of forces between the balls and the cage is lost, making the cage motion unstable. This phenomenon is evident when the angle made by the inner race ball tracks and the outer race ball tracks is small and the number of balls is six or less. However, by using ten balls, the cage motion can be made stable to a certain extent even when the angle made by the inner race ball tracks and the outer race ball tracks is made smaller. This is because, even when some balls have lost their drive force due to inverted wedge angles, this is made up for by other balls, making the cage motion stable.

Cross groove constant velocity universal joints for propeller shafts are required to have an operating angle of about 10°; through the analysis with various operating angles up to 15°, it has been ascertained that the joint can have better bending characteristics than the conventional six-ball type if the intersecting angle of the ball tracks relative to the axis is 5° or more.

Thus, the intersecting angle of the ball tracks relative to the axis is made smaller to increase the sliding stroke without reducing the maximum operating angle, and the joint can have excellent bending characteristics with little possibility of jamming when bent. This improves the work efficiency in the vehicle assembly process. When the inner and outer races have the same intersecting angle relative to the axis, the joint is excellent both in constant velocity performance and bending characteristics.

Cross groove constant velocity universal joints with eight balls have better bending torque characteristics than the conventional six-ball joints. On the other hand, if the number of balls is eight, the pairs of radially opposite ball tracks in the inner or outer race are inclined oppositely relative to the axis, and these pairs of ball tracks cannot be machined at the same time, which leads to poor machining efficiency, low productivity, and high costs. In contrast, with ten balls, the pairs of radially opposite ball tracks in the inner or outer race are inclined in the same direction relative to the axis. Therefore, these pairs of ball tracks can be machined at the same time, and thus ball tracks are machined with good efficiency, leading to good productivity and lower costs.

The invention as defined in claim 5 is characterized in that, in the cross groove constant velocity universal joint according to claim 1, the tracks contact with each other at an angle of from 30 to 50°.

### EFFECT OF THE INVENTION

According to the invention as defined in claim 1, the bolt holes are arranged between adjacent ball tracks in the disc-shaped outer race, and the outer circumference of the outer race is cut out between the adjacent bolt holes so that the outer race has a corolla-shaped outer contour, whereby the radial dimension, i.e., thickness, from the ball tracks to the outer circumference between the bolt holes is made smaller, and the weight of the outer race is reduced. Therefore, according to the invention, a weight reduction of the outer race, and consequently of the entire cross groove constant velocity universal joint, is achieved.

According to the invention as defined in claim 2, even though the intersecting angle of the ball tracks relative to the axis is made smaller in order to increase the sliding stroke of the cross groove constant velocity universal joint, there is little possibility of jamming when the joint is bent, and therefore the maximum operating angle is not reduced. Accordingly, the sliding stroke is increased without reducing the maximum operating angle of the cross groove constant velocity universal joint.

According to the invention as defined in claim 3, the intersecting angle of the ball tracks relative to the axis is 10° or more and not more than 15°, and the number of balls is ten, whereby the intersecting angle of the ball tracks relative to the axis can be made smaller to increase the sliding stroke without reducing the maximum operating angle. Thus, the joint can have excellent bending characteristics with little possibility of jamming when bent, which improves the work efficiency in the vehicle assembly process. When the inner and outer races have the same intersecting angle relative to the axis, the joint is excellent both in constant velocity performance and bending characteristics.

According to the invention as defined in claim 4, the intersecting angle of the ball tracks relative to the axis is 5° or more and not more than 9°, and the number of balls is ten, whereby the intersecting angle of the ball tracks relative to the axis can be made smaller to increase the sliding stroke without reducing the maximum operating angle. Thus, the joint can have excellent bending characteristics with little possibility of jamming when bent, which improves the work efficiency in the vehicle assembly process. When the inner and outer races have the same intersecting angle relative to the axis, the joint is excellent both in constant velocity performance and bending characteristics.

According to the invention as defined in claim 5, the track contact angle is made larger, whereby the tendency that jamming is likely to occur when the joint is bent, when the contact ratio (ball track diameter/ball diameter) is large, is reduced.

### BRIEF DESCRIPTION OF THE DRAWINGS

Fig. 1 is an end view of the outer race of the cross groove constant velocity universal joint of one embodiment of the invention;
Fig. 2 is an end view of the outer race of the cross groove constant velocity universal joint of another embodiment;
Fig. 3 is an end view of the outer race of the cross groove constant velocity universal joint of yet another embodiment;
Fig. 4 is a longitudinal cross-sectional view of a conventional cross groove constant velocity universal joint;
Fig. 5 is a front view of the joint of Fig. 4;
Fig. 6 is a developed view of the outer race inner circumferential surface and the inner race outer circumferential surface of the joint of Fig. 4;
Fig. 7 is a cross-sectional view of major parts of the ball tracks in the joint of Fig. 4;
Fig. 8 is a schematic diagram showing the relationship between the balls and the ball tracks in the joint of Fig. 4;
Fig. 9 is a front view of the outer race of the joint of Fig. 4;
Fig. 10 is a cross section taken along the line X-X of Fig. 5;
Fig. 11 is a graph showing the relationship between the bending angle and bending torque;
Fig. 12 is a graph showing the relationship between the bending angle and bending torque in the conventional cross groove constant velocity universal joint;
Fig. 13 is a graph showing the relationship between the operating angle and bending torque in one embodiment of the invention;
Fig. 14A is a graph showing the relationship between the operating angle and bending torque of various models with different intersecting angles for use in drive shafts;
Fig. 14B is a graph showing the relationship between the operating angle and bending torque of various models with different intersecting angles for use in propeller shafts;
Fig. 15 is a graph showing the relationship between the contact ratio of balls and bending torque of various models with different numbers and contact ratios of balls; and
Fig. 16 is a graph showing the relationship between the intersecting angle and constant velocity performance of various models with different operating angles.

### DESCRIPTION OF REFERENCE NUMERALS

- 10: inner race (outer joint member)
- 12: outer race inner circumferential surface
- 14: ball track
- 16: bolt hole
- 18: cut out
- 20: inner race (inner joint member)
- 22: inner race outer circumferential surface
- 24: ball track
- 30: ball (torque transmitting element)
- 40: cage

### BEST MODE FOR CARRYING OUT THE INVENTION

Preferred embodiments of the present invention will be hereinafter described with reference to the drawings.

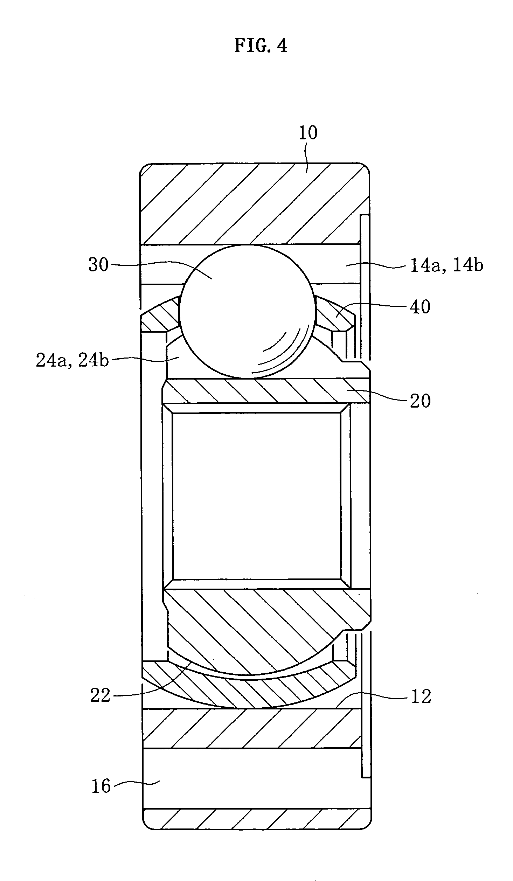

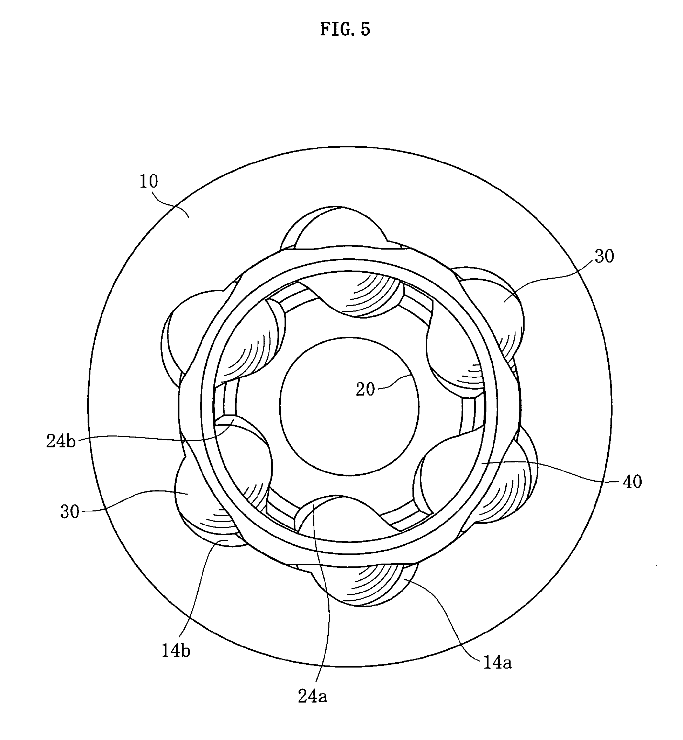

First, the basic structure of a conventional cross groove constant velocity universal joint is described with reference to Fig. 4 to Fig. 10, which illustrate one such joint. As shown in Fig. 4 and Fig. 5, the cross groove constant velocity join is mainly composed of an outer race 10, an inner race 20, balls 30, and a cage 40. The outer race 10, which is an outer joint member, is ring-shaped and formed with ball tracks 14a and 14b in the outer race inner circumferential surface 12. Similarly, the inner race 20, which is an inner joint member, is ring-shaped and formed with ball tracks 24a and 24b in the inner race outer circumferential surface 22.

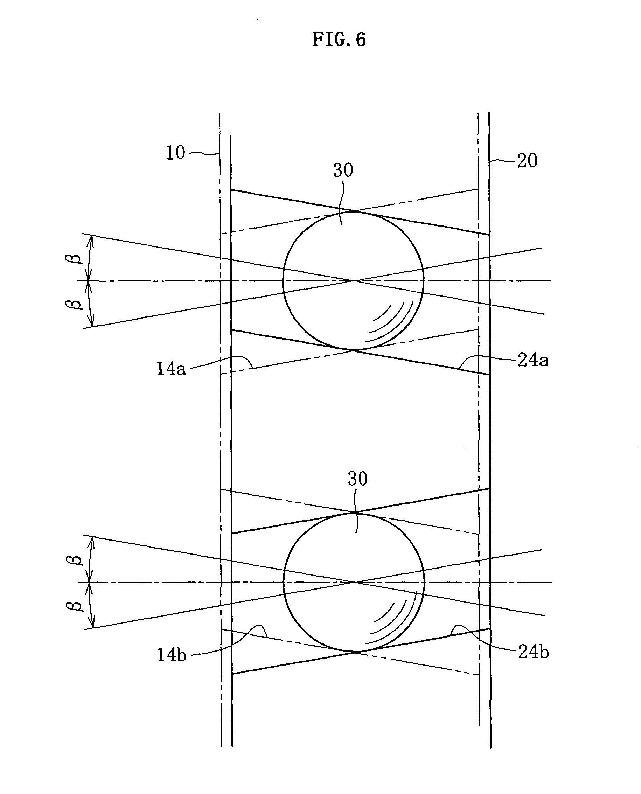

As shown in Fig. 6, the ball tracks 14a that are inclined to the axis of the outer race 10 and the ball tracks 14b that are inclined to the outer race axis oppositely from the ball tracks 14a alternate circumferentially. Similarly, the ball tracks 24a that are inclined to the axis of the inner race 20 and the ball tracks 24b that are inclined to the inner race axis oppositely from the ball tracks 24a alternate circumferentially.

The intersecting angle of each ball track 14a, 14b, 24a, or 24b with respect to the axis is denoted at β. The ball track 14a of the outer race 10 is oppositely inclined from and paired with the ball track 24a of the inner race 20; the angle they make is represented by 2β. Similarly, the ball track 14b of the outer race 10 is oppositely inclined from and paired with the ball track 24b of the inner race 20; the angle they make is represented by 2β.

Balls 30, which are torque transmitting elements, are set in intersections between the pairs of ball tracks 14a of the outer race 10 and the ball tracks 24a of the inner race 20 and between the pairs of ball tracks 14b of the outer race 10 and the ball tracks 24b of the inner race 20.

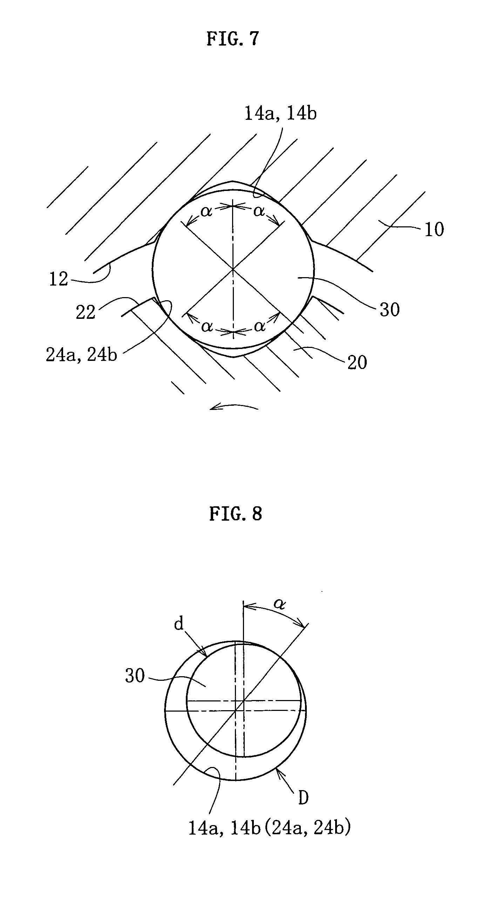

As shown in Fig. 7, the ball tracks 14a, 14b, 24a, and 24b of the outer race 10 and the inner race 20 generally have a Gothic-arch shaped or elliptic cross section, and the balls 30 make angular contact with the ball tracks 14a, 14b, 24a, and 24b. The contact angle α of this angular contact is, for example, in the range of from 30 to 50°. Fig. 8 is a schematic representation of the relationship between the balls 30 and the ball tracks 14a, 14b, 24a, and 24b; the ratio of the ball diameter d to the groove diameter D (D/d) is referred to as "contact ratio."

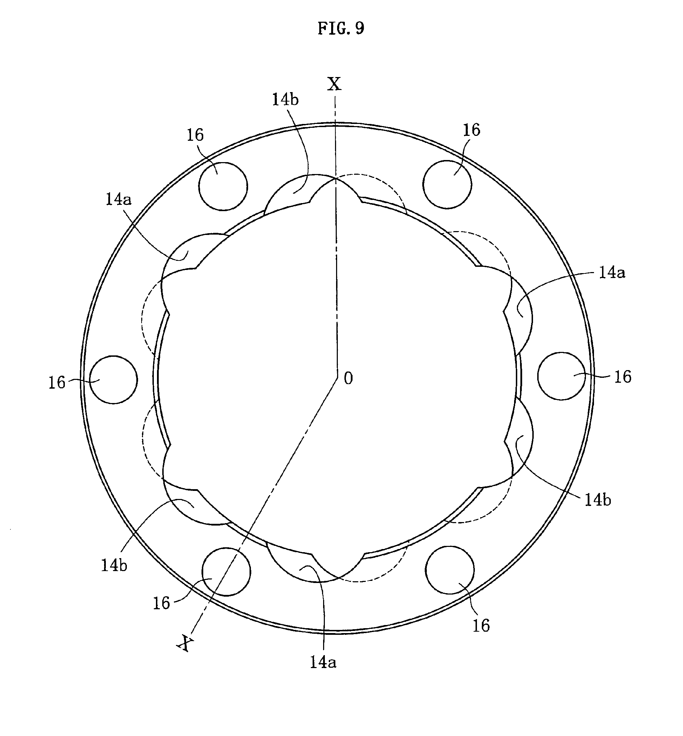

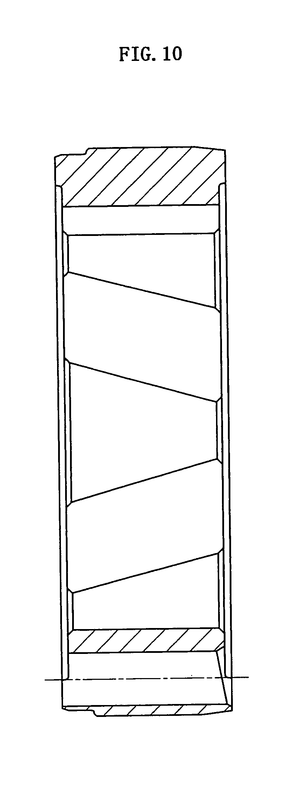

As shown in Fig. 9 and Fig. 10, the outer race 10 of the conventional cross groove constant velocity universal joint has a circular outer shape.

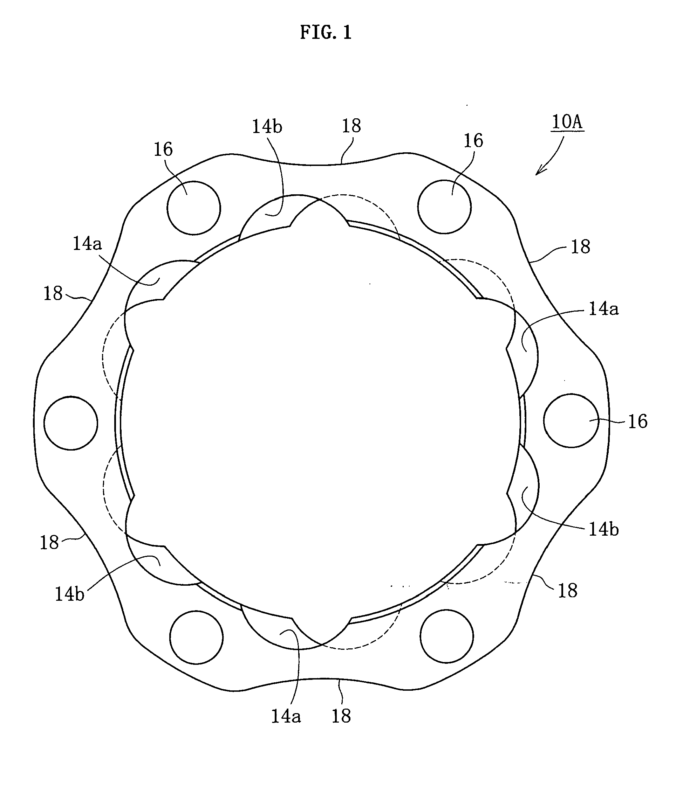

Next, preferred embodiments of this invention will be described. Fig. 1 shows one end face of the outer race of one embodiment applied to a cross groove constant velocity universal joint using six balls. In this case, the outer race 10A includes a total of six ball tracks 14a and 14b. Bolt holes 16 are circumferentially equally spaced in between the adjacent ball tracks 14a and 14b. The outer race 10A includes portions cut out in circular arcs as denoted at 18 from its outer circumference in between the adjacent bolt holes 16. As a result, the outer race 10A takes on a flower-like appearance or a corolla shape with six petals.

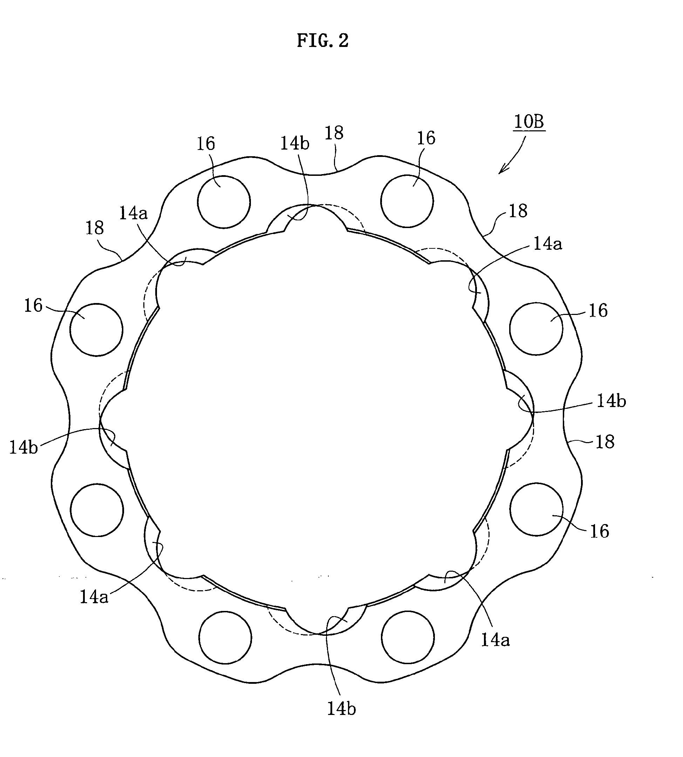

Fig. 2 shows one end face of the outer race 10B in another embodiment in which the number of balls is eight. In this case, the outer race 10B takes on a flower-like appearance or a corolla shape with eight petals.

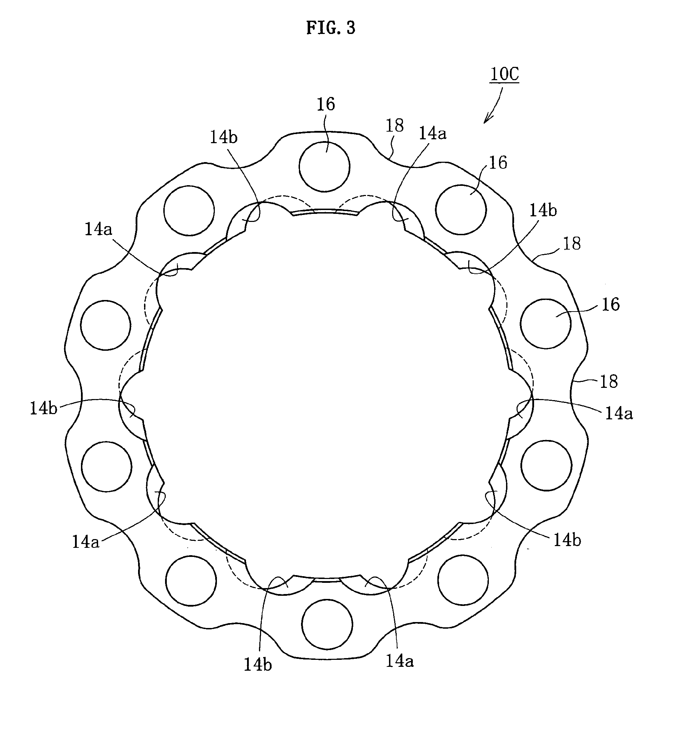

Fig. 3 shows one end face of the outer race 10C in yet another embodiment in which the number of balls is ten. In this case, the outer race 10C takes on a flower-like appearance or a corolla shape with ten petals.

As is clear from Fig. 1 to Fig. 3, in these embodiments, the outer race 10A, 10B, or 10C is reduced in weight as compared to conventional circular outer races by the amount of the portions cut off from the outer circumference of the outer race 10A, 10B, or 10C.

It is generally understood that, basically, cross groove constant velocity universal joints cannot take a large operating angle. This is because of the limit of the operating angle (angle limit) of the joint at which the wedge angle formed by the inner and outer ball tracks is inverted. It is assumed that, if the operating angle of the joint exceeds this angle limit, the cage loses balance of forces and stability, and as a result the joint loses its function as a constant velocity universal joint. This phenomenon has been ascertained with respect to common joints with six balls, and it is also known that the angle limit is determined by the contact angle and the intersecting angle of the ball tracks. Patent Document 1 shows a formulation of the possibility of making the angle limit larger by inclining the ball tracks also within the plane that contains the axis. However, this ball track shape is very hard to achieve in terms of production and quality control.

In cross groove constant velocity universal joints, the pairs of inner and outer race ball tracks make wedge angles at their intersections, and the balls are pushed toward the pocket surfaces of the cage by the act of the wedge angles. Thus the balls are always kept at the intersections of the ball tracks, and even when there is an angle change between the inner and outer races, they are maintained within the bisecting plane of the operating angle. The cross groove constant velocity universal joints are thus excellent in that they have good constant velocity performance with little rattling.

On the other hand, the operating angle range of cross groove constant velocity universal joints is not as wide as that of other types of constant velocity universal joints that control the balls by offsetting the centers of circular arc ball tracks formed in the axial direction of the inner and outer races. This is because the above-mentioned wedge angle is inverted when the operating angle becomes too large, whereupon the balance of forces applied from the balls to the cage is lost. As a result, the cage loses balance of forces and becomes unstable.

A possible solution would be to prevent the inversion of the wedge angle by making the intersecting angle of the inner and outer race ball tracks larger. However, since the ball tracks of the inner and outer races are inclined oppositely from each other with respect to the axis and circumferentially alternated, and since adjacent ball tracks cannot interfere with each other, the intersecting angle can only be increased to a limited extent.

The angle 2β made by the inner and outer race ball tracks of cross groove constant velocity universal joints also correlates with the sliding stroke of the joint; reducing the angle 2β made by the ball tracks is effective in increasing the stroke.

However, if the angle made by the inner and outer race ball tracks is made small in order to increase the sliding stroke of the joint, the maximum operating angle of the joint is reduced. The maximum operating angle is the largest possible angle at which the joint, in a nonrotating state, can be bent and extended without any excessive torque being applied. In the worst case, the bent joint cannot be extended, that is, the joint is jammed. It will be a problem during assembly to an automobile if the joint jams when bent.

The joint needs to be bent once and extended when assembled to an automobile. Therefore, if the joint has a small-range operating angle and easily jams when bent, the work efficiency of assembling the joint to the automobile is poor.

It is now seen that cross groove constant velocity universal joints have limited freedom of maximum operating angle and sliding stroke. Therefore, it is desirable that the sliding stroke be increased, without reducing the maximum operating angle of the cross groove constant velocity universal joint. In other words, it is desirable to provide a cross groove constant velocity universal joint, which has a reasonable maximum operating angle even though the intersecting angle of the ball tracks relative to the axis is made small in order to increase the sliding stroke and has excellent bending characteristics with less possibility of jamming when bent, whereby work efficiency in the vehicle assembly process is improved, and which is excellent in both constant velocity performance and bending characteristics if the inner race and the outer race have the same intersecting angle relative to the axis.

In order to find the maximum operating angle in the case with eight balls similarly to the case with six balls, the resistance torque when the joint is bent at ±10° and extended was determined through analysis, which revealed that, as the intersecting angle β of the ball tracks 14a, 14b, 24a, and 24b was made smaller, the joint did not jam until the intersecting angle β was 4.5°.

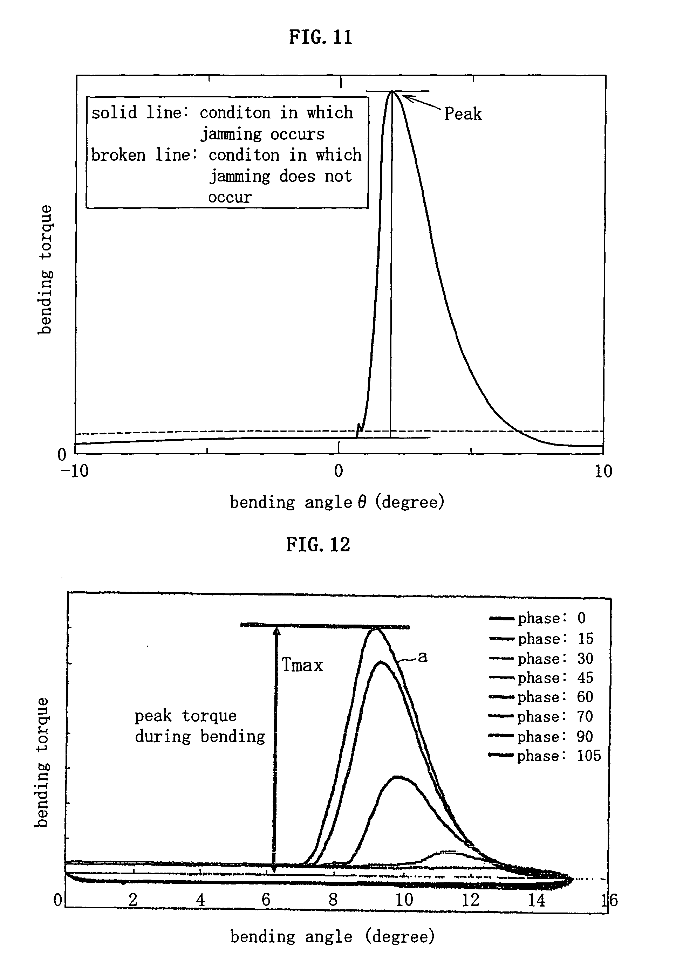

Fig. 11 shows the torque necessary for the bending in both conditions where the jamming occurs and where the jamming does not occur, the horizontal axis representing the bending angle θ, and the vertical axis representing the bending torque. As the solid-line torque curve indicates, in the condition where the bending occurs, the torque has a large peak at a certain bending angle, as compared to the bending toque indicated by the broken line under the condition where the jamming does not occur. Whether the joint jams or not can be determined by the presence of this peak.

Table 1 shows the results of the test to determine the angle at which the joint jams when bent and extended as the intersecting angle β of the ball tracks was decreased, with respect to both cross groove constant velocity universal joints with six balls and with eight balls. The bending angle θ was ±10°. The eligibility of the cross groove constant velocity universal joints is determined by whether the jamming occurred or not, circles indicating those eligible and crosses indicating those not eligible. As Table 1 indicates, it was ascertained that, with eight balls, the cross groove constant velocity universal joint can function with the intersecting angle β being as small as 4.5°. With six balls, the jamming occurred when the intersecting angle β was 8.0°.

**[Table 1]**

| No. of balls | Intersecting angle β(° ) | | | | | |
|---|---|---|---|---|---|---|
| | 4.0 | 4.5 | | 8.0 | 8.5 | 10.0 |
| □ | x | x | □ | x | o | ○ |
| □ | x | ○ | □ | ○ | ○ | ○ |

The angle limit was formerly formulated using the intersecting angle of ball tracks relative to the axis. This formula is effective irrespective of the number of balls. That is, the jamming must occur even if the number of balls is increased. However, as shown in Table 1, it was ascertained that, the jamming, which is caused by the effect of wedge angles formed by the pairs of inner and outer race ball tracks, did not occur, with eight or more balls. It is assumed that, as the number of balls is increased, even when the force applied to the cage from some balls in a certain phase is lost because of the wedge angle becoming zero, this is made up for by other balls, as a result of which the constant velocity universal joint is prevented from losing its stability.

Next, the jamming that occurs when the cross groove constant velocity universal joint is bent is described based on the analysis results. The jamming is a phenomenon where an excessive torque is required to extend the joint flexed at an operating angle. Fig. 12 shows the relationship between the bending angle and bending torque when the number of balls is six. Each of the torque curves represents the bending torque at different phases. As is seen from the torque curve (a) with a phase of 0 in this graph, the torque has a peak Tmax at a certain bending angle when the jamming occurs.

The dimensions of the six-ball models used in the analysis were as follows: Ball diameter: 7/8 (22.225 mm); PCD: 58.0 mm; intersecting angle: 10°; T100 torque: 748.5 Nm. The dimensions of the ten-ball models were as follows: Ball diameter: 19/32 (15.081 mm); PCD: 74.0 mm; intersecting angle: 5°; T100 torque: 741.3 Nm.

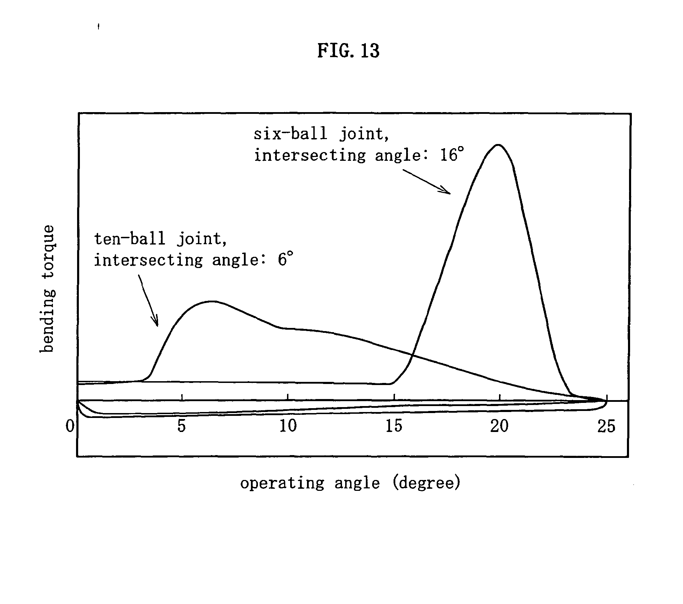

Fig. 13 shows the relationship between the bending angle and bending torque with respect to the cross groove constant velocity universal joint with ten balls, similarly to the above-described embodiment. As shown in the graph, when the number of balls is as many as ten, the bending torque at the time of jamming is smaller. When there are ten balls, as compared to the case with six balls, with the clearance being set the same, the bending torque at the time of jamming is about one third, and the jamming occurs at a different angle. With the six-ball joint, the maximum torque peak at the time of jamming appeared in three phases, while, with the ten-ball joint, the maximum torque peak at the time of jamming appeared in five phases.

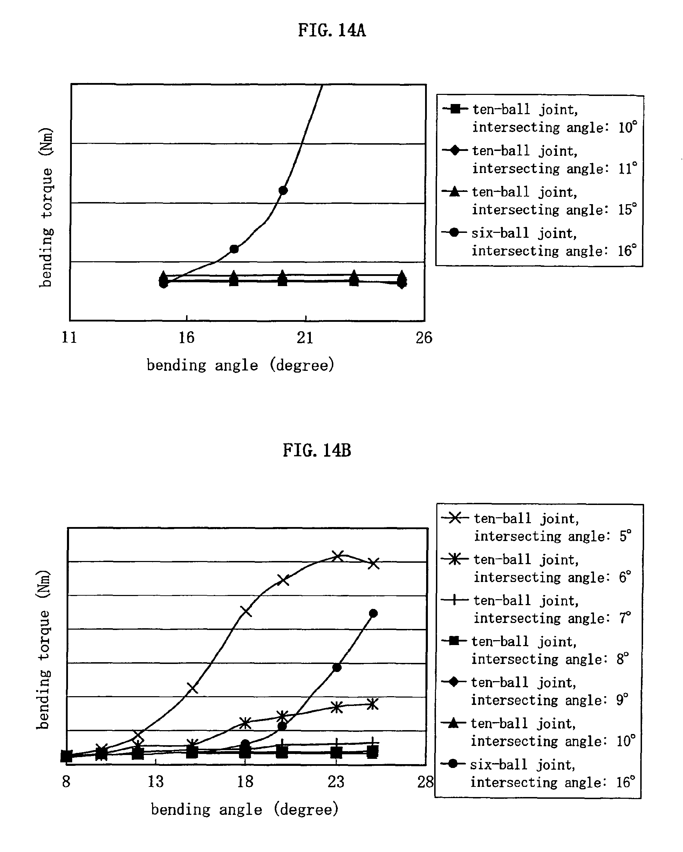

The relationship between the intersecting angle and the operating angle is now explained. Fig. 14A and Fig. 14B show the analysis results of the relationship between the operating angle and bending torque, with ten balls and with the intersecting angle being varied; Fig. 14A shows the case with driveshaft joints and Fig. 14B shows the case with propeller shaft joints. Hereinafter the parenthesized numbers indicate the values with respect to the propeller shaft joints. In these graphs there are also shown the curves indicating the case with six balls and the intersecting angle of 16° (10°). The unit of intersecting angle in the graphs is degrees.

It can be seen from the graphs that, when the intersecting angle is 10° (5°) or more, the bending torque is maintained small even when the operating angle is as large as 25° (15°). On the other hand, with the six-ball joints, even though the intersecting angle is as large as 16° (10°), the bending torque increases rapidly with the increase of the operating angle from around 18° (12°). Accordingly, it is understood that, ten-ball joints with the intersecting angle of 10° (5°) or more have better bending characteristics than six-ball joints. More preferably, the intersecting angle should be 11° (6°) or more.

The operating angle of cross groove constant velocity universal joints required for drive shafts (propeller shafts) is usually about 20° (10°); it suffices if the bending torque remains small within the operating angle range of 25° (15°). The bending characteristics are better if the intersecting angle is large, but as mentioned before, if the intersecting angle is too large, the sliding stroke cannot be made large. The practical range, therefore, of the intersecting angle of ten-ball cross groove constant velocity universal joints for drive shafts (propeller shafts) is 15° (9°) at most. Accordingly, the intersecting angle β should preferably be 10° (5°) or more and not more than 15° (9°).

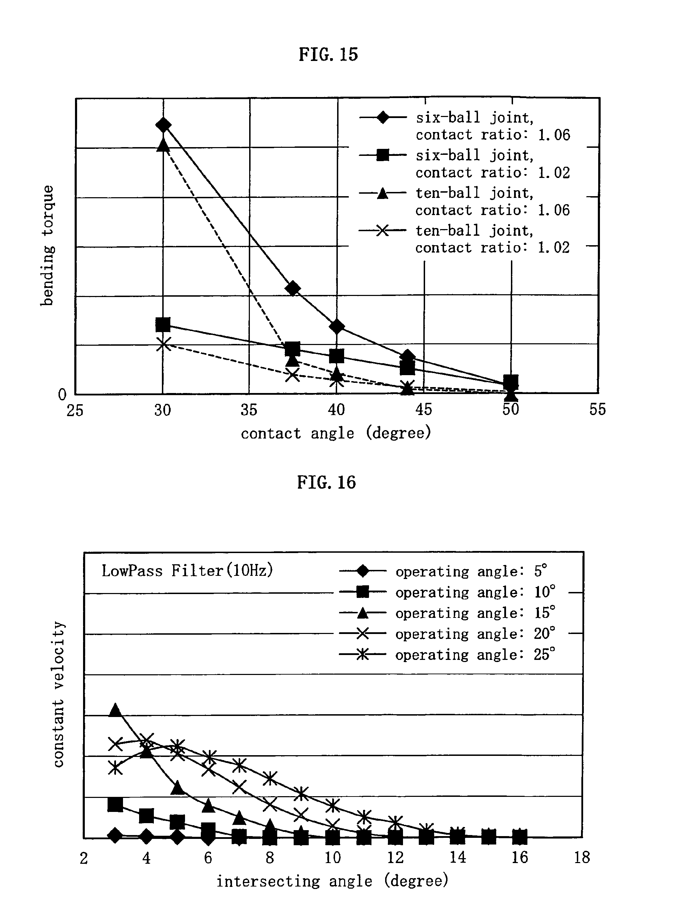

Fig. 15 shows the relationship between the contact angle α and bending torque of joints with ten torque transmission balls and the ball contact ratios of 1.06 and 1.02 and of joints with six balls and the ball contact ratios of 1.06 and 1.02 (four types). The relationship between the contact angle and bending torque will be explained with reference to this graph. When there are ten balls, the effect of the ball contact ratio, i.e., the effect of the track shape, is similar to that of six-ball joints. In the case with ten-ball joints, there is substantially no effect of contact ratio when the contact angle is 40°. When there are ten balls and the ball contact ratio is 1.02, then the bending torque is small even when the contact angle is 30°. Therefore, the applicable range of the contact angle is 30 to 50°. If the ball contact ratio is more than 1.02, for example, 1.06 or more, then the contact angle should preferably be 40° or more, at which the ball contact ratio does not affect the bending torque.

Fig. 16 shows changes in the constant velocity performance plotted against the intersecting angle at various operating angles of ten-ball cross groove constant velocity universal joints, the horizontal axis representing the intersecting angle and the vertical axis representing the constant velocity performance. The constant velocity performance will be explained with reference to this graph. The constant velocity performance is represented by (output rotational speed change)/(input rotational speed). Generally, the smaller the operating angle is and the larger the intersecting angle is, the better the constant velocity performance is. A conventional six-ball joint with an intersecting angle of 16° (10°) and an operating angle of 20° (10°) which is a requirement to be used for drive shafts (propeller shafts) has a constant velocity performance parameter of about 0.12 (0.07). On the other hand, with ten torque transmitting balls, if the intersecting angle is the same 16° (10°) as the conventional joint, then the constant velocity performance parameter is 0.012 (0.006) at the operating angle of 20° (10°), which is better than that of the conventional joint. When the operating angle is 20° (10°), with the ten-ball joint, if the intersecting angle is 10° (5°), the constant velocity performance parameter is about 0.16 (0.18), which is about the same as the above conventional joint, and if the intersecting angle is 11° (6°), the constant velocity performance parameter is about 0.08, which is better than the above conventional joint.

As demonstrated above, when the operating angle is 20° (10°) which is a requirement to be used for drive shafts (propeller shafts) and if the intersecting angle is the same, ten-ball joints have better constant velocity performance than six-ball conventional joints. The ten-ball joints have about the same constant velocity performance as the conventional joint even if the intersecting angle is reduced to 10° (6°), and therefore ten-ball joints can have a smaller intersecting angle to increase the operating stroke, without presenting any problem in terms of constant velocity performance.

The balls of ten-ball joints are smaller, and therefore, if the same load is applied to each ball, the surface pressure at the interface between the balls and ball tracks 14a, 14b, 24a, and 24b is higher than that of the joint with six torque transmitting balls. However, with ten balls, the load applied to each ball is smaller as the number of balls is increased, and it is possible to come up with a design that solves the problem of high surface pressure.

Ten-ball cross groove constant velocity universal joints are also excellent in productivity. That is, even if the number of balls is eight, the cross groove constant velocity universal joint has better bending torque characteristics than conventional six-ball joints. On the other hand, if the number of balls is eight, the pairs of radially opposite ball tracks in the inner or outer race are inclined oppositely from each other relative to the axis, and these pairs of ball tracks cannot be machined at the same time, which leads to poor machining efficiency, low productivity, and high costs. In contrast, with ten balls, the pairs of radially opposite ball tracks in the inner or outer race are inclined in the same direction relative to the axis. Therefore, these pairs of ball tracks can be machined at the same time, and thus ball tracks are machined with good efficiency, leading to good productivity and lower costs.

## Claims

1. A cross groove constant velocity universal joint, comprising: an inner race having ball tracks in an outer circumferential surface thereof; a disc-shaped outer race having ball tracks in an inner circumferential surface thereof; balls set between the pairs of the ball tracks of the inner race and the ball tracks of the outer race; and a cage that retains all the balls within the same plane, wherein: bolt holes are arranged between adjacent ball tracks of the outer race; and an outer circumference of the outer race is cut out between adjacent bolt holes so that the outer race has a corolla-shaped outer contour.

2. The cross groove constant velocity universal joint according to claim 1, wherein: the ball tracks intersect with an axis at an angle of 4.5° or more and less than 8.5°; and the number of balls is eight.

3. The cross groove constant velocity universal joint according to claim 1, wherein: the ball tracks of the outer race and the ball tracks of the inner race that are oppositely inclined intersect with an axis at an angle of 10° or more and not more than 15°; and the number of balls is ten.

4. The cross groove constant velocity universal joint according to claim 1, wherein: the ball tracks of the outer race and the ball tracks of the inner race that are oppositely inclined intersect with an axis at an angle of 5° or more and not more than 9°; and the number of balls is ten.

5. The cross groove constant velocity universal joint according to claim 1, wherein the ball and the ball tracks contact with each other at an angle in a range of from 30 to 50°.
